# EUROPEAN PATENT APPLICATION

(11) **EP 3 479 978 A1**
(43) Date of publication of application: **08.05.2019**
(21) Application number: 18204171.5
(22) Date of filing: 02.11.2018
(51) Int. Cl.: B28B 1/52, B28B 7/00, B28B 7/06, B28B 7/34

(54) **MOULD, MOULDING APPARATUS AND METHOD**

(30) Priority: 02.11.2017 GB 201718207
(71) Applicant: Hoegsgaard Barnes, Adam Christopher, St. Albans, Hertfordshire AL3 5LQ (GB)
(72) Inventor: Hoegsgaard Barnes, Adam Christopher, St. Albans, Hertfordshire AL3 5LQ (GB)
(74) Representative: Dolleymores

(57) **Abstract**

A mould for forming a curable material into a predetermined three-dimensional shape, the mould comprising a flexible membrane (1), wherein a first surface (3) of the membrane (1) is arranged to receive a layer of the curable material thereon, and the membrane (1) can be developed from a substantially flat state into a three-dimensional developed state.

## Description

The present disclosure relates to a novel mould, a moulding apparatus comprising the mould, and a corresponding method.

It is well known to form three-dimensional items from curable material. Particular examples include pots, and similar open receptacles, formed from fibre reinforced concrete. These have typically been formed by laying up the curable material on the inner face of an open-topped three-dimensional mould. The mould may typically comprise a rigid receptacle formed from glass reinforced plastic (GRP), or otherwise.

Such a method is time consuming, particularly in the event the moulded item has a complex geometry. Moreover, it is difficult to achieve a consistent wall thickness in the finished article.

The present invention arose in a bid to provide an improved moulding technique.

According to the present invention in a first aspect, there is provided a mould for forming a curable material into a predetermined three-dimensional shape as recited by Claim 1.

The fold lines may define a plurality of polygons, or other shapes, in abutment with one another. A plurality of the fold lines may be arranged at an oblique angle to one another.

The stiffening members may be joined to the membrane or integrally formed therewith. The stiffening members may be formed on or adhered to the second surface of the membrane.

One or more or all of the stiffening members may be polygonal. The stiffening members may comprise panels. The stiffening members may be substantially planar.

Fold reinforcing members may be provided that extend, longitudinally, along a plurality of the fold lines, wherein each of the fold reinforcing members extends along a respective one of the fold lines. The fold reinforcing members may comprise plastic strips, rods or otherwise. The fold reinforcing members may be provided with longitudinal openings for receiving stiffening/supporting rods therethrough.

The flaps may be provided with flap reinforcing members. These may be adhered to the flaps or otherwise attached to the flaps. The flap reinforcing members are most preferably plastic. They may comprise suitably sized shaped strips.

By the provision of a stiffening structure, form may be provided to the mould as it is developed into the three-dimensional shape. The stiffening structure further assists in the development of the predetermined three-dimensional form by aiding in the definition of fold lines in the membrane. Complex three-dimensional structures are possible.

According to further aspects there are provided:
A moulding apparatus comprising the mould of the first aspect and a former, which supports the mould in the developed shape.

Where fold reinforcing members are provided that comprise longitudinal openings, the rods received thereby may be supported by the former.

A moulding apparatus comprising the mould of the first aspect and a lifting mechanism for developing the membrane from the substantially flat state into the three-dimensional developed state. The lifting mechanism may be electrically or manually powered.

A moulding apparatus comprising a mould according to the first aspect, which comprises a guide that is arranged to be placed on the surface of the membrane when in its substantially flat state, the guide comprising a substantially continuous wall which defines a void having a footprint equal to an area of the first surface of the membrane that is arranged to receive the curable material.

These further aspects may be taken in isolation from one another or in any combination.

In a yet further aspect, there is provided a method of forming a curable material into a predetermined three-dimensional shape using a mould according to the first aspect or a moulding apparatus according to any of the further aspects, the method comprising the steps of: applying the uncured material across the first surface of the membrane whilst the membrane is in the substantially flat state; developing the mould into the three-dimensional developed state; and, following curing of the material, separating the three-dimensional moulded article from the mould.

Further, preferred, features are presented in the dependent claims.

Embodiments of the present invention are described below with reference to the accompanying drawings, in which:
Figure 1 shows a rear perspective view of a mould according to a first embodiment of the invention in a substantially flat state;
Figure 2 shows a bottom view of the mould of Figure 1 in a substantially flat state;
Figure 3 shows a top view of the mould of Figure 1 in a substantially flat state;
Figure 4 shows a perspective view of the mould of Figure 1 in a three dimensional developed state;
Figure 5 shows a perspective view of the mould received by a former; and
Figure 6 shows a perspective view of an article formed using the mould of Figure 1.

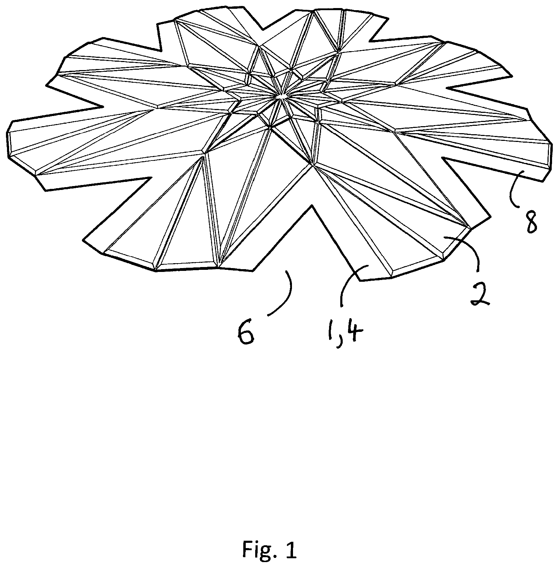

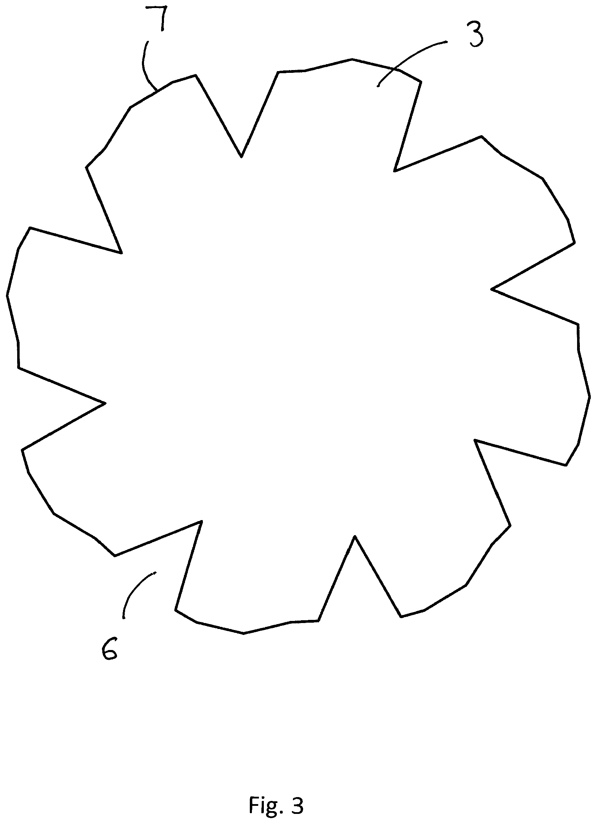

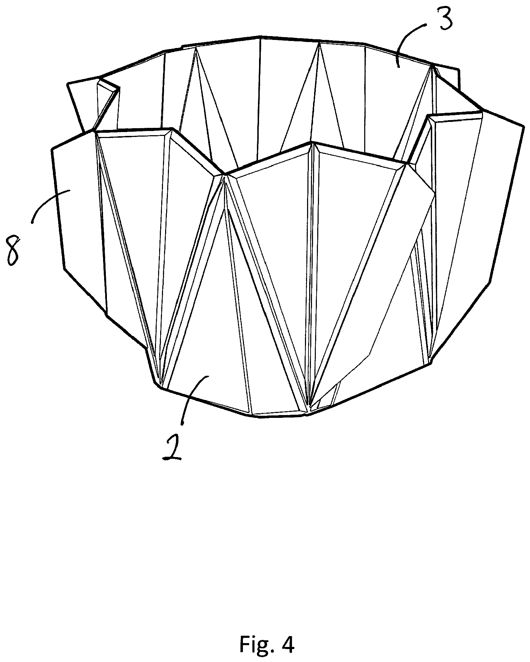

Figures 1 to 4 show a mould for forming a curable material into a predetermined three-dimensional shape. The mould comprises a flexible membrane 1. A first surface 3 of the membrane 1, as best seen in Figure 3, is arranged to receive a layer of the curable material thereon. The mould is arranged such that the membrane 1 can be developed from a substantially flat state, as shown in Figure 3, into a three-dimensional developed state, as shown in Figure 4.

In the present arrangement, a plurality of stiffening members 2 are provided on a second surface 4 that is opposed to the first surface 3. The stiffening members 2 combine to form a stiffening structure. It must be noted, that whilst all disclosed arrangements are provided with the stiffening structure, it may take various alternative forms.

The mould may comprise one or more additional reinforcing or support layers. One reinforcing/support layer may be provided that covers the stiffening members and the second surface 4 of the membrane 1. Additionally or alternatively, a reinforcing/support layer may be provided between the stiffening members and the second surface 4 of the membrane 1. These reinforcing/support layers may take the form of a mesh. It is most preferably a plastic mesh but could be a fabric mesh. The mesh may be fixed in place using adhesive. The mesh covering the stiffening members is particularly beneficial to prevent delamination of the stiffening members 2 from the membrane 1 although may be omitted.

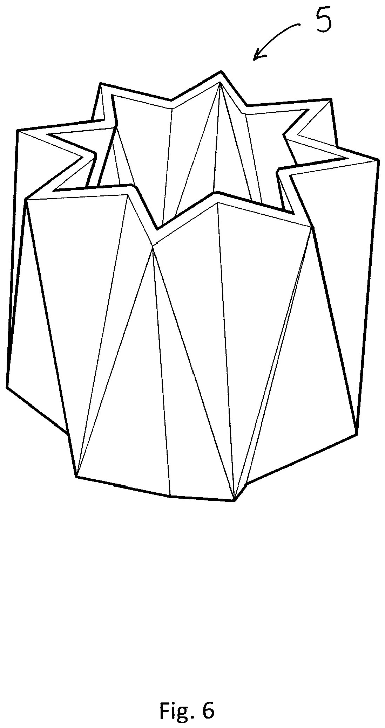

A method of forming a curable material into a predetermined three-dimensional shape using the mould comprises the steps of: spreading the uncured material across the first surface 3 of the membrane 1 whilst the membrane is in the substantially flat state of Figure 3 with the first surface 3 facing upwards; developing the mould into the three-dimensional developed state of Figure 4; and, following curing of the material, separating the three-dimensional moulded article (5, Figure 6) from the mould.

The curable material may comprise, but is not limited to, fibre reinforced concrete or clay. Those skilled in the art will readily appreciate that the mould may be used to form articles from numerous alternative curable materials.

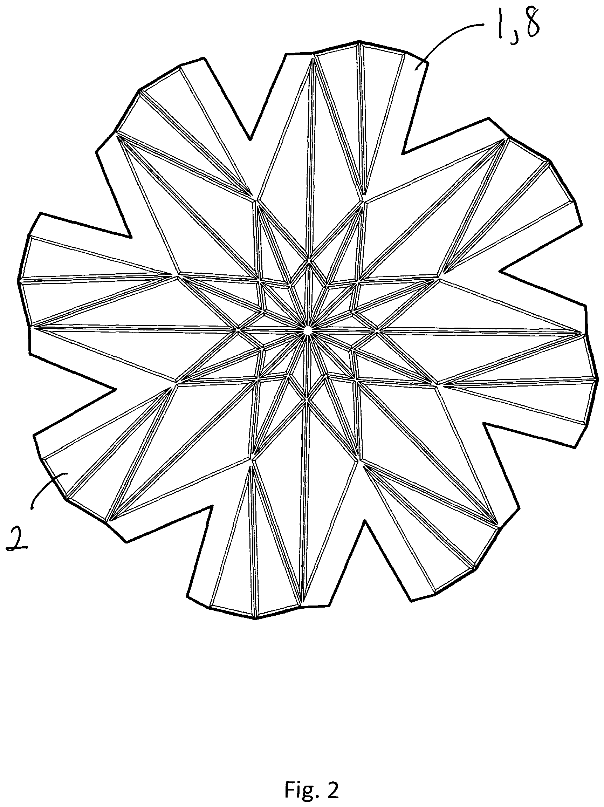

In the present arrangement, the stiffening members are provided in a predetermined array in spaced relation to one another, as best seen in Figures 1 and 2. The spaces between the stiffening members 2 define fold lines in the membrane 1, as best seen in Figure 4. A plurality of the fold lines are at an oblique angle to one another, as clearly seen, however, this need not be the case and will depend of the element to be moulded. The stiffening members 2 may be attached to the second surface 4 of the membrane. They are most preferably adhered to the second surface 4.

In a preferred modification (not shown), fold reinforcing members may be provided that extend, longitudinally, along a plurality of the fold lines. Each of the fold reinforcing members will extend along a respective one of the fold lines. The fold reinforcing members provide additional support against any bowing of the mould when loaded with material in the developed state. The form of the fold reinforcing members is not particularly limited. In one exemplary arrangement, the fold reinforcing members comprise flat bar strips. The flat bar strips may be adhered to the membrane. The flat bar strips may each be arranged with a narrow edge on the respective fold line. The flat bars mounted like this will and project away from the membrane. A mesh may be provided that is attached to the membrane and extends over the fold reinforcing members. The fold reinforcing members may comprise one or more longitudinally extending tubular members attached at/adjacent to a narrow edge that is distal the membrane and distal to the narrow edge affixed thereto. The tubular members define a longitudinal opening for receiving stiffening/support rods therethrough, which may engage and be supported by a former, as discussed below.

The materials from which the membrane, the stiffening members and the reinforcing members are formed is not to be limited. The membrane must have sufficient flexibility to adopt the pre-determined three-dimensional developed form, whilst the stiffening members, which have a higher bending rigidity than the membrane, should have sufficient stiffness to provide form to the mould as it is developed into the three-dimensional shape. Numerous suitable materials will be readily appreciated by those skilled in the art. The membrane and stiffening members may in one example both comprise polychloroprene (Neoprene®), with the membrane taking the form of a rubber sheet and the stiffening members taking the form of foam panels. In an alternative, the stiffening members may comprise foam panels of a different material, such as ethylene-vinyl acetate (EVA). The reinforcing members may be formed from plastic. In one exemplary arrangement they are formed from poly vinyl chloride (PVC).

The membrane may be of unitary form, cut from a single larger sheet or moulded. It need not be of unitary form, however. It may, for example, be formed from multiple pieces of sheet, suitably joined together.

The form of the stiffening structure/members is not to be limited and will vary in dependence on the particular article to be produced. In the present arrangement, the stiffening members are polygonal planar panels. They may be formed by cutting a sheet of suitable material, such as the Neoprene® or EVA foam mentioned above. They could, of course, in alternative arrangements be of three-dimensional form. Moreover, whilst each of the stiffening elements is of unitary construction in the present arrangement, which is preferred, this need not be the case.

It should be noted that whilst the stiffening members of the stiffening structure are separate to one another in the present arrangement, they could be joined to one another, hingedly or otherwise (other than through the membrane 1). As above, they could be integrally formed as part of a moulded layer forming the stiffening structure.

The stiffening structure could comprise a suitably formed unitary layer. Moreover, the stiffening structure could be formed integrally with the membrane in the event the membrane is moulded, wherein stiffening members could be integrally formed by providing regions of increased thickness in the membrane, the regions of increased thickness could be provided in a suitable array, such as shown in Figure 2.

A plurality of radially extending cut-outs 6 are provided in the peripheral edge 7 of the membrane. In the present arrangement the cut-outs comprise V-shaped notches. Their form will, however, be dependent on the element to be moulded. Edge portions of each of the cut-outs, which are preferably free from the stiffening members 2, define flaps 8 that can be joined to one another to maintain the mould in the developed state, as shown in Figure 4. For this purpose one or more fixing means (not shown) for releasably joining the flaps to one another will be provided. The form of the fixing means is not particularly limited. In a preferred arrangement, the fixing means comprises one or more clamps to join each adjacent pair of flaps 8. In alternative arrangements the flaps could be provided with suitable fixing means, such as poppers, hook and loop fasteners, clips, or otherwise, fixed thereon. They may otherwise be bolted to one another. It is notable that the application area of curable material to the mould is generally coterminous with the region of the membrane that is provided with the stiffening members, the flaps 8 are mainly outside the application area of the curable material. A small amount of material may extend to the flaps so that when the flaps are joined the curable material is squashed together. The flaps may be provided with flap reinforcing members. These may be adhered to the flaps or otherwise attached to the flaps. The flap reinforcing members are most preferably plastic. They may comprise suitably sized shaped strips. Again, the specific form of the flap reinforcing members is not particularly limited, as will be appreciated by those skilled in the art.

The mould preferably forms part of a moulding apparatus, which may comprise one or more or all of a lifting mechanism, a former and a guide. These further elements are discussed below.

A lifting mechanism may be provided for developing the membrane from the substantially flat state of Figure 3 into the three-dimensional developed state of Figure 4, following the application of a layer of curable material. The lifting mechanism may be powered or manually operable. The lifting mechanism preferably comprises a winch. The winch may connect to a hub, which has a plurality of cords connected thereto, the cords being attached to points at (or adjacent to) the periphery of the membrane.

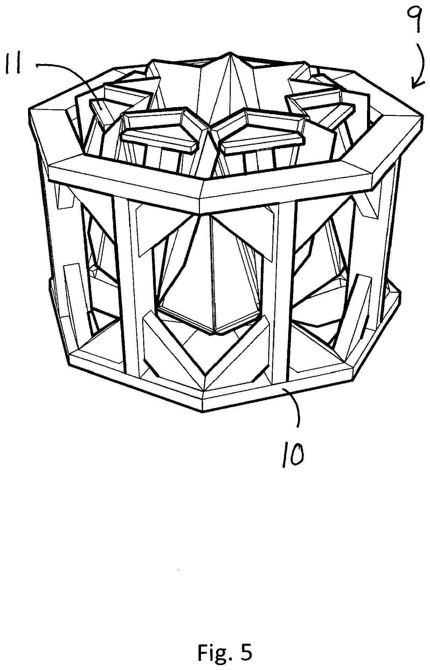

In order to maintain the three-dimensional developed form of the mould during curing, and, where appropriate to allow for the formation of indented details, a former may be provided. The former may comprise any element or assembly that is suitable to support the mould in the developed three-dimensional state. When the fold reinforcing members are provided with the tubular members, the former may be arranged to receive/support the stiffening/supporting rods. The former may engage an outer surface of the mould that opposes the first surface 3 of the membrane 1. An exemplary former 9 (which omits the rod supports but which could include the rod supports) is shown in Figure 5. In the present arrangement, the former comprises a framework 10 with a plurality of suitably positioned articulating support members 11. The former is not to be limited, however. In an alternative arrangement, the former comprises an open receptacle that at least partially receives the mould. The former in this case will comprise an inner surface that corresponds to the pre-determined three-dimensional shape, at least in respect of the portion of the mould that is received. The inner surface may be suitably contoured or may comprise appropriate projections from the inner surface. Of course numerous alternative forms of former will be readily conceived by those skilled in the art in dependence on the three-dimensional form of the article to be produced. Any arrangement may be coupled with a projecting base to assist in the formation of any indented features on an underside of the moulded article.

To aid in the application of the layer of the curable material, a guide may be provided that is arranged to be placed on the surface of the membrane when in its substantially flat state. The guide is a separate removable element that comprises a continuous wall. The wall defines a void having a footprint equal to an area of the first surface of the membrane that is arranged to receive the curable material. In the present arrangement, as discussed above, this is the entire surface area of the membrane 1 and a part only of the flaps 8, as discussed above. The guide may take the form of a suitably shaped and sized "cookie cutter" that has a wall height equal to the desired wall thickness of the article being formed using the mould. In use, the guide will be placed on the mould, in its flat state, with glass fibre reinforced concrete or any alternative curable material placed in the void. The void will be filled to the height of the continuous wall and levelled off. The guide will then be removed and the mould can be developed into the appropriate three-dimensional form.

It is to be noted that whilst the disclosed article, as seen in Figure 6, comprises an open-topped receptacle, the present invention is not to be limited in this regard. The mould may be used to form numerous alternative three-dimensional articles, including contoured panels. Moreover, the mould may be used to form closed three-dimensional forms by the provision of a portion of the mould that folds over to close the three-dimensional form of the mould, as will be appreciated by those skilled in the art.

## Claims

1. A mould for forming a curable material into a predetermined three-dimensional shape, the mould comprising a flexible membrane, wherein a first surface of the membrane is arranged to receive a layer of the curable material thereon, and the membrane can be developed from a substantially flat state into a three-dimensional developed state, wherein a stiffening structure comprising a plurality of stiffening members is provided on a second surface of the membrane that is opposed to the first surface, wherein the stiffening members are provided in a predetermined array with regions between adjacent stiffening members defining fold lines in the membrane, wherein a plurality of cut-outs are provided in the peripheral edge of the membrane, and wherein edge portions of each of the cut-outs, define flaps for joining to one another when the mould is in the three-dimensional developed state.

2. A mould as claimed in Claim 1 further comprising one or more fixing means for releasably joining the flaps to one another.

3. A mould as claimed in Claim 2, wherein the fixing means comprises a clamp, poppers, hook and loop fasteners, clips or bolts.

4. A mould as claimed in any preceding claim, wherein the flaps are provided with flap reinforcing members.

5. A mould as claimed in any preceding claim, wherein a plurality of the fold lines are provided with fold reinforcing members, each of the reinforcing members extending longitudinally along a respective one of the fold lines.

6. A mould as claimed in any preceding claim, which further comprises a support layer that covers the stiffening members and the second surface of the membrane and/or a support layer that lies between the stiffening members and the second surface of the membrane.

7. A mould as claimed in Claim 6, wherein the support layer comprises a mesh.

8. A moulding apparatus comprising a mould according to any preceding claim and a former, which supports the mould in the developed shape.

9. A moulding apparatus as claimed in Claim 8, wherein the former comprises a support surface and/or protruding support members that correspond to the pre-determined three-dimensional shape.

10. A moulding apparatus as claimed in Claims 8 or 9, wherein the former comprises an open receptacle that at least partially receives the mould.

11. A moulding apparatus as claimed in any of Claims 8 to 10, wherein the former comprises a plurality of articulating support members.

12. A moulding apparatus as claimed in any of Claims 8 to 11, when dependent on Claim 5, wherein each of the fold reinforcing members comprises a longitudinal opening for receiving a rod therethrough, the rod being supported by the former, following insertion through the opening, to support the mould in the developed shape.

13. A moulding apparatus comprising a mould according to any of Claims 1 to 7, or a moulding apparatus as claimed in any of Claims 8 to 12, which comprises a lifting mechanism for developing the membrane from the substantially flat state into the three-dimensional developed state.

14. A moulding apparatus as claimed in Claim 13, wherein the lifting mechanism comprises a plurality of cords that attach to points at or adjacent to the periphery of the membrane.

15. A moulding apparatus comprising a mould according to any of Claims 1 to 7, or a moulding apparatus as claimed in any of Claims 8 to 14, which comprises a guide that is arranged to be placed on the surface of the membrane when in its substantially flat state, the guide comprising a continuous wall which defines a void having a footprint equal to an area of the first surface of the membrane that is arranged to receive the curable material.
